# EUROPEAN PATENT SPECIFICATION

(11) **EP 0 834 817 B1**
(45) Date of publication and mention of the grant of the patent: **02.08.2000**
(21) Application number: 96830500.3
(22) Date of filing: 01.10.1996
(51) Int. Cl.: G06F 15/80

(54) **Programmed neural module**
Programmierter Neuronalmodul
Module neuronal programmé

(43) Date of publication of application: 08.04.1998
(73) Proprietor: FINMECCANICA S.p.A. AZIENDA ANSALDO, 16128 Genova (IT)
(72) Inventor: Baratta, Daniela, 16143 Genova (IT); Caviglia, Daniele, 16145 Genova (IT); Parenti, Riccardo, 16030 Pieve Ligure, (Genova) (IT); Valle, Maurizio, 17025 Loano, (Savona) (IT)
(74) Representative: Perani, Aurelio

(56) References cited:
- US-A- 4 254 474
- US-A- 5 226 092
- IEEE MICRO, vol. 14, no. 3, 1 June 1994, pages 16-28, XP000448653 VERLEYSEN M ET AL: "AN ANALOG PROCESSOR ARCHITECTURE FOR A NEURAL NETWORK CLASSIFIER"
- PROCEEDINGS OF THE INTERNATIONAL JOINT CONFERENCE ON NEURAL NETWORK (IJCNN), SEATTLE, JULY 8 - 12, 1991, vol. 1, 8 July 1991, INSTITUTE OF ELECTRICAL AND ELECTRONICS ENGINEERS, pages 481-486, XP000239692 GRAF H P ET AL: "A NEURAL-NET BOARD SYSTEM FOR MACHINE VISION APPLICATIONS"
- IEICE TRANSACTIONS ON ELECTRONICS, JULY 1993, JAPAN, vol. E76-C, no. 7, ISSN 0916-8524, pages 1197-1205, XP000394462 SHIMOKAWA Y ET AL: "A programmable parallel digital neurocomputer"

## Description

The present invention relates to a neural module provided with a control system, preferably programmed, which determines the module's flow of operations as a function of its output state and enables it to form hierarchical logical structures or processes, such as logical tree structures, without the intervention of external controlling and decision-making tools.

The module may advantageously be used in the field of recognition and classification of shapes, images and any phenomenon that may be represented, by means of an analog or digital description, by a set of data.

For example, an adaptive system with an input register, an output register and a memory for a matrix of weight data is disclosed in US-A-4254474, wherein the weight data are modified, in a learning mode, when a function of the output is larger than zero.

It is known that, in order to overcome the limited operating speed of neural networks simulated by software in conventional computer systems, even in those of high capacity, neural modules in the form of integrated electronic circuits, both analog and digital, have been devised.

In most cases, in order to meet diverse application requirements, these modules are programmable, or, more correctly, configurable.

In particular, it is possible to configure a neural module so that it behaves in the same way as a predetermined plurality of neurons having a predetermined number of synapses.

In other words, before the neural module is used for a processing operation, the characteristics of the neural structure are defined, after which the processing operation is executed, using the neural structure thus predefined and optimized for a specific application.

The processing operation which is executed is therefore defined by input data, which have to be processed, and which by their nature are independent of the processing tools and of configuration commands which define a processing structure which is predetermined and invariable in the processing operation. The output data produced by the processing operation have no direct effect on the processing structure, even in the case of provision of neural networks with feedback, in which the output data are reintroduced, as data to be processed, into the neural structure.

However flexible their configuration, these neural modules are not designed in accordance with a basic aspect of the processing operations which are to be implemented, and which in the logical terms may consist of a number of sub-processes organized in a hierarchical tree structure in which a first "root" sub-process is followed by lower-order sub-processes or "leaves" determined as a function of the result of the root sub-process and of the higher-order sub-processes.

The use of neural modules of the known type for the execution of these hierarchical processes has the disadvantage that, on completion of the higher-order sub-process in the hierarchy, the module has to interrupt the process and communicate the result of the executed operations to an intelligent unit, in the form of the user or a supervisory system, which, according to the result, must reconfigure the neural module and command it to execute a predetermined sub-process of a lower hierarchical order selected from a plurality of sub-processes according to the result of the higher-order sub-process.

The operation must be repeated at each transition between hierarchical levels.

Consequently, the process execution time is considerably extended, not only as a result of the operations of notifying the sub-process results and of the consequent reconfiguration operations, but also because of the necessity, in the absence of storage means, of reintroducing the data to be processed, generally in considerable amounts, and distributed in time, to the neural network.

To these disadvantages is added the fact that, generally, a plurality of neural modules are connected in parallel to a host or supervisory processor by means of a system bus, in such a way that the various exchanges between the individual neural modules and the host processor may interfere with each other.

This entails the arbitration of access to the system bus, the introduction of further delays (comprising at least the latency times of the system bus, if not also the arbitration times), and the possible saturation of the system bus, in other words the inability to manage, through the system bus, communication with a number of neural modules in excess of a predetermined amount.

To overcome these disadvantages, at least in part, an article by Caviglia, Valle, Baratta, Baiardo and Marchesi, "A neural ASIC architecture for real time (defect) classification", published in Proceedings of the 21^{st} Euromicro Conference (Euromicro 95), pp. 632-638, proposed the construction of neural tree architectures in which a first neural module executes a root sub-process and a second neural module, structurally identical to the first and connected to it in series, executes a lower-order sub-process (or leaf) on the same input data, the leaf sub-process being selected from a number of possible sub-processes as a function of the result of the "root" sub-process.

However, this solution also has limitations, especially if the processing operation consists of a number of orders of sub-process, since it entails a non-optimal use of the physical resources, in other words of the hardware. For it is evident that the "leaf" neural modules (in other words, those which implement the leaf sub-processes) are inactive throughout the time required for the execution of the higher-order sub-processes, unless a "pipeline" execution of a number of separate processes is adopted, with problems of synchronizing the processes.

In any case, a specific physical topology (hardware) is required to produce each specific neural architecture in an effective way.

The invention relates to a neural module as set out in claim 1.

The neural module of the present invention overcomes the limitations of the known art and is capable of executing by itself processes structured in a plurality of N hierarchical levels of sub-processes (where N is any number greater than 1), and also processes comprising a plurality of leaf sub-processes at the same hierarchical level, without the external intervention of control elements and with optimal use of the physical resources.

These results are achieved by a neural module provided with a bank of input data registers, a bank of output decision registers and an internal control logic, preferably programmed, which, as a function of the result of a root sub-process, and therefore of data generated internally by the module, causes the execution, in the same module, of one or more successive lower-order sub-processes, each determined and selected as a function of the result of the sub-processes executed previously. According to a further embodiment of the present invention, the configuration of the sub-processes subsequently executed by the neural module is also defined, from a plurality of configurations, by the internal controller which is also programmed as a function of the result of the higher-order sub-processes and without external intervention.

For example, the number of input nodes, hidden nodes and output nodes, as well as the number of synapses and their corresponding weights, may be different and specific for each sub-process.

As will be made clear, it is also possible to define particular relations of coupling and multiple decisions between sub-processes, and correspondingly to define sub-processes with coupled and multiple-decision configurations.

Advantageously, according to a further embodiment of the present invention, the neural module consists of a plurality (two or even more) of single-layer neural processing elements connected in series, each provided with an input register bank, or input buffer, and an output register bank, or output buffer.

This makes it possible to execute hierarchical processes, including those with a special "coupled leaf" structure, fully explained below, in which two or more sub-processes are executed jointly with a partial time overlap, with evident advantages.

In particular, while a second processing element is executing a second phase of a first sub-process, a first processing element executes a first phase of a second sub-process on the same input data.

The concept of coupled sub-processes or "leaves" does not necessarily imply that the two sub-processes are executed on the same input data.

Thus, the first processing element is advantageously provided with two separate buffers to store two separate sets of input data.

This also permits, as an alternative to the execution of hierarchical processes with coupled leaves, pipeline execution, with the time overlap of separate hierarchically structured processes (two or more). Thus, while the first processing element is executing a phase of a first process, the second processing element, instead of remaining idle while awaiting the data produced by the first processing element, can be executing a phase of a second process separate from the first, and the two processing elements may alternate in the execution of successive phases of separate processes, thus making optimal use of the hardware resources and achieving very high levels of performance.

If there are more than two processing elements connected in series, it becomes all the more possible to execute more than two separate processes with a time overlap.

To relieve the user of the task of programming the module for this application with a program which causes the execution of two separate processes, the module provides, in addition to the duplication of input/output buffers of the processing elements, an at least partial duplication of the programmed internal control logic.

In this way a structure with two processing channels which share the processing elements is produced.

The characteristics and advantages of the present invention will be more clearly understood from the following description of a preferred embodiment and from the attached drawings, in which:
- Figure 1 is a logical diagram of an elementary neural network, or perceptron;
- Figure 2 is a logical diagram of a neural network with multiple outputs, or a perceptron with multiple outputs;
- Figure 3 is a logical diagram of a multiple-layer, or generalized, perceptron;
- Figure 4 is a block diagram of a neural module according to the prior art which implements the logical structure of the multiple-layer perceptron shown in Figure 3;
- Figure 5 is a block diagram of an architecture providing an example of a process structured hierarchically in tree form;
- Figure 6 is a block diagram of a neural module made according to the present invention;
- Figure 7 is a diagram providing an example of a process structured hierarchically with sub-process leaves coupled;
- Figure 8 is a diagram providing an example of a process structured hierarchically with double decision-making;
- Figure 9 is a block diagram of a preferred embodiment of a neural module made according to the present invention;
- Figure 10 is a schematic block diagram of a variant of the embodiment of a neural module shown in Figure 9.

To enable the invention to be understood more clearly, it will be useful to discuss certain considerations of a general nature first.

A neural network may be represented in an abstract way as a directed graph in which each node indicates a neuron and the arcs or synapses represent the connections between neurons.

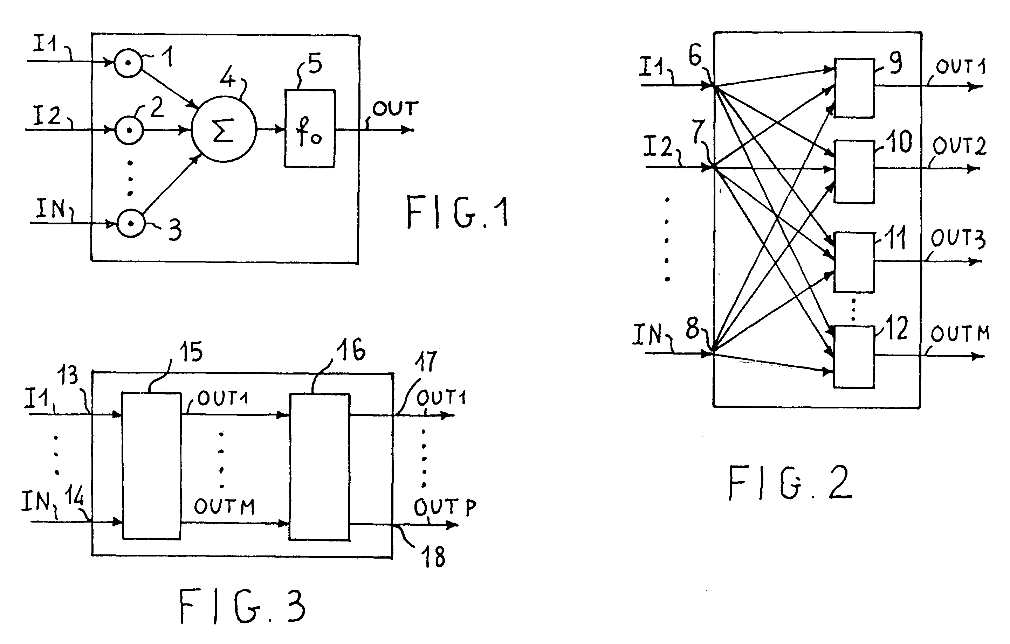

With reference to Fig. 1, a standard elementary artificial neural network or perceptron (having only one neuron) is defined in the art as a logical element which executes the addition of N input signals I1, I2, IN which are conveniently weighted (in other words, each signal is multiplied by a corresponding weighting coefficient W1, W2,...WN), and processes the sum thus obtained by an activation function to produce a signal at the output, as the result of the executed process.

To produce a physical embodiment of the logical element thus defined, it is therefore possible to interconnect in a convenient way a plurality of functional logical multiplier elements 1, 2, 3, connected to the input terminals (and also to a weight store if necessary) and forming the "synapses" of the perceptron, to a functional logical adder network 4.

The output of the adder network 4 is connected to the input of a functional logical activating element 5 which produces an output signal DS at the output of the perceptron.

The adder network 4 and functional activating element 5 form the "node" or neuron of the perceptron.

The input and output data or signals may equally well be analog or digital, and the networks, generally but not exclusively electronic, which carry out the functions of multiplication (weighting), addition and activation may be of either an analog or a digital type.

It is known that the multiple-output perceptron, or multiple perceptron, shown in Fig. 2, in which the inputs 6, 7, 8 are connected by multiple-node synapses 9, 10, 11, 12, whose outputs form the outputs of the multiple perceptron, can easily be derived from the single-output perceptron.

The weights applied to the different input data naturally vary between the synapses connected to the same node, and, for the same input, are also generally different for synapses connected to different nodes.

It is known that the neural elements shown in Figs. 1 and 2 are limited in their decision-making in respect of the input data which they can handle to data regions, which must be separable in a linear way.

Consequently, multiple-layer perceptrons, which do not have this limitation, have been designed conceptually and physically constructed; an example of these is shown in Fig. 3.

In Fig. 3, the input signals or data I1, IN are applied to inputs 13, 14 of a first layer of nodes or multiple perceptron 15, of the type shown schematically in Fig. 2.

The signals or data, suitably processed, leave the first layer of nodes and are input to a second layer of nodes or multiple perceptron 16, which is also of the type shown schematically in Fig. 2.

The second neural layer is called the "output layer".

The different neural blocks of the output layer receive the output signals from the first layer, multiply them by a weighting coefficient, generally varying between synapses, execute the addition of the weighted signals and process the sum with a transfer function f(o), producing at the output signals which are sent to the outputs 17, 18.

In the perceptron thus generalized there may be present one or more layers of nodes, called hidden nodes, which are intermediate between the input layer and the output layer, and a perceptron of this type is called a "multiple-layer perceptron", while the perceptrons shown in Figs. 1 and 2 are called "single-layer perceptrons".

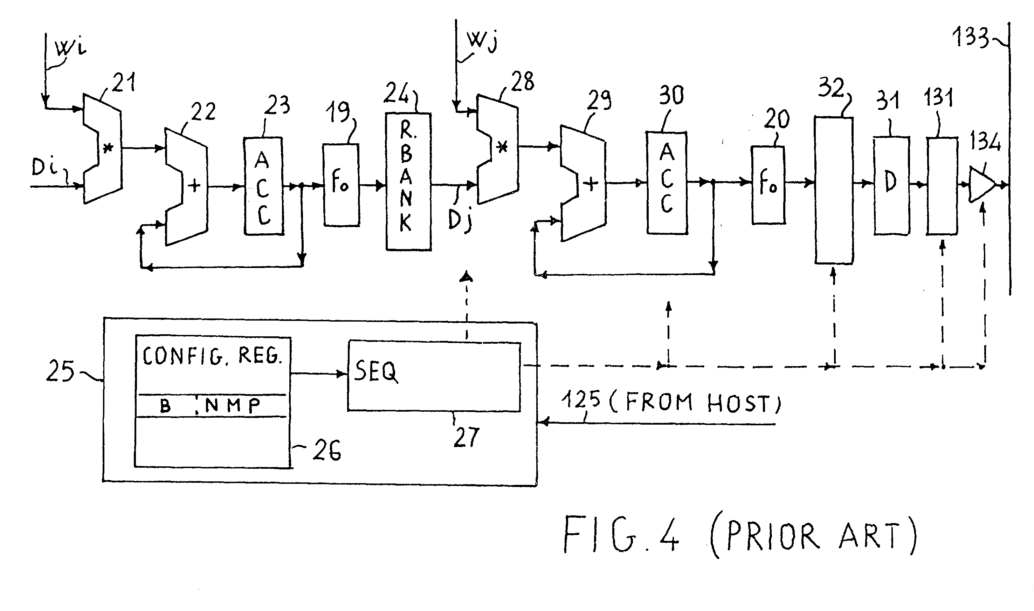

Fig. 4 shows, by way of example, a practical embodiment of a multiple-layer perceptron of the type shown in Fig. 3.

Although an embodiment in which each input synapse has a corresponding multiplier circuit (analog or digital) and each node would have an adder circuit (analog or digital) is technically possible, this type of approach would be extremely complicated and inflexible.

As shown in Fig. 4, the approach generally followed in digital embodiments is that of providing a single input multiplier 21, shared in time by a number of signal or data inputs Di and by a number of weights Wi, whose output is connected to a first input of an adder circuit 22 with its output connected to an accumulator register 23.

The output of the accumulator 23 is connected to a second input of the adder 22 and, through a circuit 19 which executes the activation function, to a register bank 24.

As is known, the activation function may be one selected from various functions, for example an identity function (in which case the circuit 19 is superfluous), a step function, a linear function with saturation, a sigmoid function or other.

Evidently, the multiplier circuit 21 can execute in a sequence in time the multiplication of a plurality of input data Di by the corresponding weights Wi, and the sum of the weighted data is also found in sequence by the adder 22, stored in the accumulator store 23, modified by the activation function (if different from the identity function) and finally saved in one of the registers of an output register bank 24.

The number of iterations N of the multiplication and partial addition operations determines the number N of input nodes of the processing element produced in this way; the repetition of the iterations M times, with the accumulated sum being saved each time in the register bank 24, determines the number M of output nodes of a single-layer processing element.

This physical architecture is extremely flexible, since the numbers N and M can be specified as required (within certain limits imposed by the accumulation capacity of the register 23 and of the banks 24) according to the particular requirements.

For this purpose, a programmable control logic 25 is provided, essentially comprising a configuration register 26 (loaded from a host system through a FROM HOST channel 125), in which the values of N and M are set, with an address base B for addressing a store of weights Wi, and a sequencer 27 (which for the sake of simplicity is preferably of the hardware type), which controls in time the operations executed by the various elements 21, 22, 23, 24, as well as, obviously, the reading of a store of weights which is not shown.

A second multiplier 28, connected to the output of the register bank 24, a second adder 29, with a first input connected to the output of the multiplier 28, and a second accumulator register 30, with its input connected to the output of the adder 29 and its output connected to a second input of the adder 29 and, through a transfer circuit 20 which operates according to the activation function, to the input of an output register bank 32 (one for each output node), complete the architecture, forming a perceptron with multiple layers, specifically with two layers.

The elements 28, 29, 30, 32 are also controlled by the programmable control logic 25 which can determine the number P of decision-making output nodes of the perceptron according to requirements.

A decision block 31, which extracts from the registers of the bank 32 the data stored in them, and as a function of these produces a decision data item at the output and loads it in an output register 131, may also be provided down-line from the register bank 32.

The decision function may consist, for example, in the selection of the highest value from the values stored in the bank 32.

An embodiment of this type in the form of a circuit, with all the variants which have been proposed to optimize processing speed, described for example in the cited article, suffers from a fundamental limitation: at the end of a neural processing operation, the programmable control logic 25 must communicate the result of the processing to the user or to a host computer.

As stated previously, when the operation is executed, access is obtained to a system bus 133, and output gates 134 are enabled to transfer to the system bus the result of the process stored in the register bank 32 or in the output register 131.

This has all the disadvantages mentioned previously, which are present not only in the case when the neural processing operation can be considered complete.

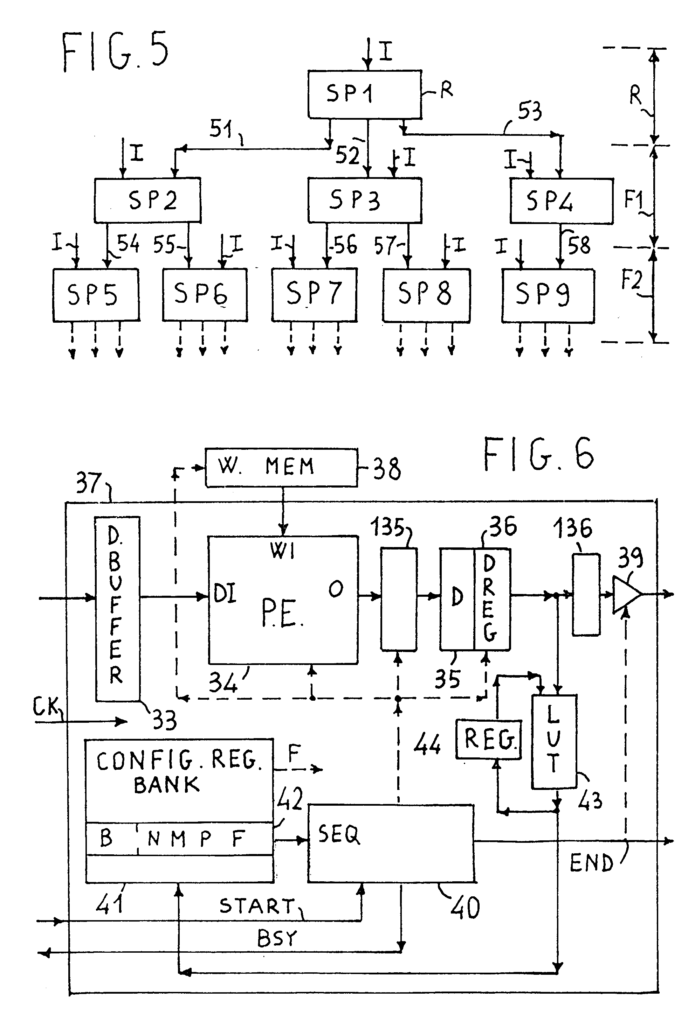

Unfortunately, as already stated, the processing and recognition operations required from a neural network may consist of a plurality of sub-processes hierarchically structured in the form of a tree whose structure is shown by way of example in the diagram in Fig. 5.

In a first sub-process or "root" SP1 executed on the input data I, it is not a specific class of characteristics (for example, in the case of recognition of images of alphabetic characters, all the characters identifiable as A) that is recognized, but a super-class from a small number (for example 3) of super-classes S1, S2, S3.

Each super-class S1, S2, S3 is associated with a sub-process leaf SP2, SP3, SP4, in each of which it is possible to discriminate, using the same input data I, between more detailed classes S4, S5, S6 and S7, S8 respectively, each of which is associated with one or more leaf sub-processes of a lower hierarchical order SP5, SP6, SP7, SP8, SP9 and so on.

In the structure shown in Fig. 5, the process consists of a root R, a first layer of leaves F1 and a second layer F2.

The number of layers may obviously be greater and may vary from branch to branch.

In a tree structure of this type, the execution of the first root sub-process makes it possible to decide which of the sub-processes in the leaf layer F1 must be used to improve the recognition, and the execution of the leaf sub-process of the first layer makes it possible to decide which of the sub-processes in the layer F2 must be used to further improve and if possible complete the recognition.

The most immediate solution offered by the prior art for the configuration of a neural network for the purpose of executing the recognition described above, is to use a number of multiple-layer perceptrons in parallel, each configured for the execution of one of the different sub-processes; have all the sub-processes executed; collect the results of the different sub-processes; and have a host system complete the recognition on the basis of these results.

Each process "leaf" therefore corresponds to a dedicated and appropriately configured physical resource, and the result is a significant consumption of physical resources, even though this technique is very fast.

At the opposite extreme, the prior art proposes mapping the different sub-processes of the branch followed to carry out the recognition, on the same physical resource (neural module) in different and successive periods.

This makes it necessary not only to communicate to a supervisory system the result of each executed sub-process, but also to reconfigure the neural module at the start of each sub-process, for the execution of this particular sub-process, and to resubmit the data for processing at the input of the module.

The document cited previously proposes an intermediate solution, as follows:

A first neural module executes the root sub-process, and its result determines the type of leaf or sub-process to be used subsequently, which is executed by a second neural module, connected in series to the first, without the necessity of exchanging data with a host supervisor.

The output of the first neural module forms an address base for weights which have to be used by the second neural module which is configured in this way, at least in respect of the weights.

However, it is evident that the use of the physical resources thus dedicated to the execution of the process is not optimal, since the second neural module is activated only when the first neural module has completed its task.

The two neural modules must inevitably operate in alternating time phases.

The simultaneous use of the two modules for the pipeline execution of sub-processes belonging to two different processes is certainly conceivable, but this entails problems of synchronization of the processes and the necessity of reprogramming the two modules each time, thus aggravating instead of alleviating the problem of communication with a host supervisor.

After this long but necessary preamble, the characteristics and advantages of the present invention will be immediately understandable.

Fig. 6 is a block diagram showing a neural module made according to the present invention, preferably in the form of an integrated circuit 37.

The neural module comprises a register bank 33 for storing input data I, with outputs connected to the input DI of a neural processing element PE 34, preferably but not necessarily of the multiple-layer type, whose output O is connected to the input of an output register bank 135.

The output register bank 135 is connected in turn to the input of a decision block D 35 with an output storage register bank D-REG 36.

The processing element 34 receives at one input WI, from an external weight memory W.MEM 38, the weights to be applied in each situation to the input data.

The output of the register bank D-REG 36 is connected to gates 39 interfacing with a system bus, preferably but not necessarily through a register bank 136, organized in FIFO configuration, to store a plurality of results of overall decision-making processes.

The neural module is completed by a programmable control logic comprising a sequencer 40 and a configuration register bank 41.

Instead of the configuration of a single sub-process leaf, the configurations of all the sub-process leaves which may possibly be used in a recognition process are stored in the configuration register bank with a plurality of addressable locations.

The configuration of each leaf in the more general case may be defined by a multiple-field configuration code 42.

A field B forms an address base for addressing the memory 38 and a field F identifies the leaf as the final leaf of a branch.

Other fields N, M, P may define the number of input nodes N of the perceptron 34, the number of hidden nodes M and the number of output nodes P.

The output of the register bank 36 is connected to an address input of the bank 41, in this case through a transcoding table (or "look-up table") 43.

It should be noted that the transcoding table (which is essentially a register bank) is itself capable of carrying out the whole function of storing the different configurations, and can therefore replace the bank 41.

The sequencer 40 is activated in a known way by a START command received from an external source, for example from a data acquisition system, on condition that the sequencer is not already active, as indicated for example by a BSY signal generated by the same sequencer, and evolves as a result of a clock signal CK received from an external source or generated within the neural module.

The operation of the neural network is very simple.

When the sequencer is activated, the internal registers of the perceptron 34 are reset, together with the output banks 135, 36, and the loading of the data register bank 33 is initiated.

The register bank 41 addressed by an initialization code output from the bank 36, in the reset state, sends signals to the sequencer 40 which enable it to execute a root sub-process, and therefore to address the memory 38 with addresses increasing from a base B, obtaining products and sums in a number determined by N, M, and P.

On completion of the operations, the decision result which is output from the block D 35 is loaded into the bank 36.

If the root sub-process is identified as the final leaf by a signal F output from the bank 41, the process is complete, and the sequencer 40 indicates the end of the process by an END signal sent in a known way to a supervisory system.

The END signal contains various protocols (interruption/notification) by which the neural module can communicate the result of the process to the supervisory system.

As a result of this signal, the neural module 37 obtains access to a system bus, enables the gates 39 and transfers the result of the process, stored in the bank 36, to the system bus.

On completion of the operation, the sequencer returns to the inactive state and, with a BSY signal deasserted, indicates its readiness to execute further recognition processes.

By contrast with neural networks according to the known art, if the root sub-process is not identified as the final one, the data output from the bank 36, converted in this case by the code converter LUT 43, addresses a new location in the configuration bank 41, which brings about configuration of a new process leaf requiring execution. The new configuration is received by the sequencer 40.

The sequencer 40 then continues the processing of the input data with different weights, if necessary with a new number of input nodes, hidden nodes and output nodes from the block 34.

The new decision is loaded into the bank 36 and updates its contents.

The process is repeated without sending interruptions or messages to the supervisory system until a sub-process is called which corresponds to a leaf described in the configuration bank 41 which is also a final leaf of a branch of the process.

In this case, the result of the whole process, and not that of a sub-process, is communicated to the supervisory system, without the activation of interprocessor messages in the time interval elapsing between the start and the end of the process.

In other words, the whole process is executed without interventions from the supervisory system, being based on the results of the different processes.

By connecting the FIFO register bank between the bank 36 and the gates 39, as shown in Fig. 6, it is possible to decrease further the messages output to the supervisory system.

For greater flexibility, the transcoding executed by the code converter 43 may be determined by a combination of input data which "remember" the branch followed: a register 44 may store the data output from the code converter 43 and re-enter it as an address field.

Thus, with reference to Fig. 5 again, it is not necessary for the data output from the bank 36 to define one of the many possible branches S1, S2,...S8 which start from any sub-process, but only one of the possible branches starting from a specific leaf sub-process which has already been executed (for example, only branches S6 and S7 starting from SP3, if the sub-process which has already been executed is SP3).

Evidently, the sequencer 40 may consist of a finitestate machine, in other words a hardware or microprogrammed sequencer, as in a control system which operates on the basis of a program entered by the user, with the advantage, in this case, that the neural module can easily be adapted to different application requirements.

In this second case, the program which controls the execution of the process is conveniently structured in a number of routines and essentially comprises an instruction of the type:
JTF(α)
in other words an instruction for an indirect jump to an instruction address defined by α, where α is the data output from the code converter 43 or, if this is not present, from the decision register bank.

This jump instruction defines the configuration of the leaf sub-process to which the jump is to be made, on the basis of the result of the preceding sub-process.

The fact of whether or not a leaf sub-process is the final one of a process may conveniently be specified in a dynamic way.

This has the advantage, for example, of permitting the execution of the same sub-process in different branches as either a final or an intermediate sub-process.

In this case, the jump instruction may have a structure of the type JTF(α),(γ) where γ is a bit specified during programming which defines the type of leaf as an intermediate or final leaf.

In the definition of a hierarchical process structure, it has been found to be advantageous, for a more effective recognition and classification of shapes and images, to define configurations of sub-process leaves described as "coupled", in multiples of two if necessary.

The term "coupled sub-processes" signifies two or more separate sub-processes which run with different weights on the same data or possibly on different data, with the conventional operations of weighting and summation, to produce two or more totals, while the decision is taken on the basis of a combination of the results (for example, their mean).

In many applications, it is equally advantageous to define decision-making processes with a plurality of separate confidence thresholds which require multiple decisions, each based on a different decision threshold.

For example the decision element 35 in Fig. 6 may extract from the registers of the bank 135 the maximum value stored therein and the value immediately below this, and load them into the bank 36.

Following the result of the multiple decision, the same input data I may undergo a series of different types of sub-processes, as explained above.

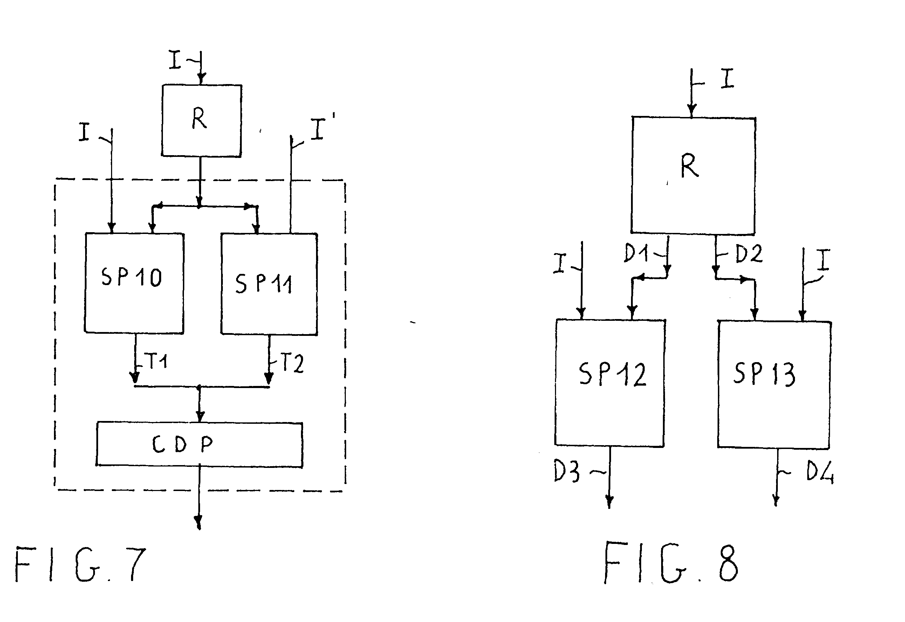

Fig. 7 shows an example of a hierarchical recognition process structure which uses these types of sub-processes in the form of coupled leaves.

A root sub-process R determines that the recognition operation requires the combined activation of two leaf sub-processes SP10, SP11 executed on the same data or on different data I, I', and that a decision must be taken on the basis of the mean of the totals T1, T2 accumulated by the two sub-processes.

The two sub-processes SP10, SP11 therefore have in common a decision phase or common decision process CDP which may lead to the conclusion of the process or to the activation of a further leaf sub-process (also with coupled leaves).

To execute the two sub-processes with a single physical resource it is possible to execute one of the two sub-processes first and save the accumulated processing total T1, and then to execute the second sub-process, add the accumulated total T2 to T1, divide by two (or more generally by N, in the case of N sub-processes), and make the decision on the basis of the result.

However, it would be preferable to execute the two sub-processes with a time overlap, even if this is only partial, using the same physical resources.

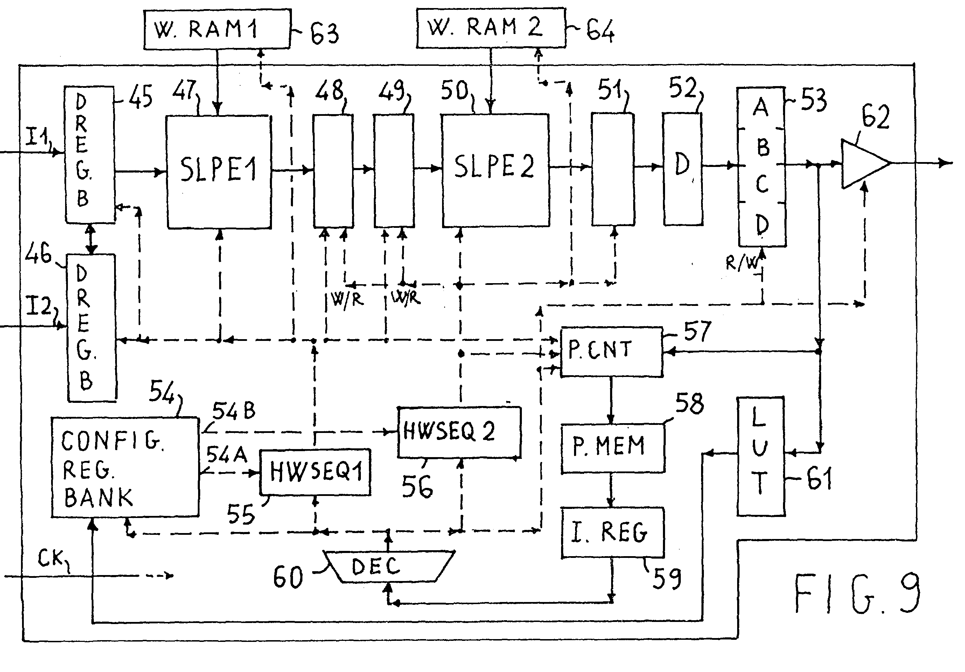

This possibility is offered by the preferred embodiment of a neural module shown in Fig. 9 and described below.

Fig. 8 shows an example of a hierarchical recognition process structure with multiple decision-making, which in this example is double.

A root sub-process leads to a pair of decisions D1, D2, each of which activates one of two separate sub-processes SP12, SP13 which conclude with decisions D3 and D4 respectively, and which may be followed, in this case, by further leaf processes which are not illustrated.

In this case also, it is desirable to execute the two sub-processes SP12, SP13 with a time overlap, using a single physical resource. This possibility is also provided by the neural module shown in Fig. 9.

The neural module shown in Fig. 9 comprises two register banks 45, 46 (coupled to permit the exchange or "swapping" of their contents) for input data I1, I2, a first processing element or single-layer multiple perceptron SLPE1 47, with an input connected to the output of the register bank 45 and an output connected to an output register bank 48, connected in series to an input register bank 49 for a second single-layer processing element SLPE2 50.

The output of the second processing element 50 is connected to the input of an output register bank 51.

The combination of all the elements considered up to this point forms a multiple-layer perceptron.

The output of the register bank 51 is connected to the input of a decision block 52 whose output is connected to the input of a decision register bank 53, comprising for example four registers, A, B, C, D.

The control section of the neural module comprises a configuration register bank (CONFIG.REG.BANK) 54, a first and second hardware sequencer (HWSEQ1) 55, (HWSEQ2) 56, and a programmed control logic consisting of a program counter P.CNT 57 (which obviously has a saving register, not illustrated, for the re-entry of jump instructions), a program store P.MEM 58, an instruction register I.REG 59, and an instruction decoder DEC 60.

As in the case shown in Fig. 6, the control section preferably, but not necessarily, comprises a transcoding table LUT 61, which is itself capable of carrying out the function of the configuration register bank and can replace it.

The program counter 57 is incremented at the command of the two sequencers 55, 56 and the decoder 60.

It may also be loaded, when commanded by the decoder 60, with data contained in one of the registers A, B, C, D of the bank 53, in this case previously converted by LUT 61.

The program counter 57 reads the store 58 each time, and the data read from the store is loaded into the instruction register 59 and applied to the input of the decoder 60, which decodes it into a plurality of command signals distributed to the various elements of the neural module, including output gates 62 leading to a system bus.

The output data from the registers A, B, C, D, in case transcoded, are also applied as selection address field to the bank 54 and determine the selection of a sub-process leaf register, whose weight address base is defined together with, in this case, the number of input, hidden and output nodes.

The definition of the leaf type as the final leaf is preferably set during programming as will be seen subsequently.

The bank 54 is provided with two separate outputs 54A and 54B to supply data relating to two separate leaf configurations, separately and simultaneously, to the sequencers 55, 56.

The neural module structured in this way communicates with two external weight stores WRAM1 63, WRAM2 64, which are read by the two sequencers 55, 56 with addresses increasing from an address base which may be supplied to the two sequencers as the output of the configuration register bank as illustrated, or sent directly to the stores as a field of more significant address bits.

The neural module structured in this way is extremely versatile and permits optimal use of the resources, with the mapping of entire processing operations on the same resource and without the necessity of communication with a supervisory system at an intermediate point in the process.

This is because the structure of the process to be executed is defined within the module by a few simple program routines stored in the store 58, and evolves according to the conditions which occur in the module.

The different program routines define different configurations or types of sub-process leaves, and in particular, purely by way of example:
- a single (non-coupled) process leaf;
- a coupled or multiply coupled root or leaf;
- a multiple decision root or leaf.
Tree processes are constructed by successive calls of the appropriate routines.

The construction of the different program routines only requires a small set of extremely simple instructions, preferably but not necessarily of the type described below, whose structure, of the 10-bit type for example, comprises a 4-bit field or instruction code which defines the type of instruction and a 6-bit field which defines variable parameters:

CLT: resets to zero the various internal registers of the perceptron, the banks 48, 49 and the output banks 51, 53).

Specialization parameters are not required: if such parameters are provided, it is possible to have a selective zero resetting of the internal registers and the banks.

SLPE1 M: activates the processing element SLPE1 (47) and the sequencer 55 in one of a plurality of leaf or root configurations (64 in the example) defined by M.

SLPE2 M: activates the processing element SLPE2 (50) and the sequencer 56 in one of a plurality of leaf or root configurations defined by M.

SLPE x,α+β: activates the processing elements SLPE1 (x=1) or SLPE2 (x=2) (and the corresponding sequencers) for the execution of the process leaf addressed by α + β where α is the content of one of the registers A, B, C, D of the block 53 defined by α, and
β is the value of the increment (β = 0, 1, 2...7).

DIV x: divides by x (x = 2, 4, 8) the content of the accumulator of SLPE2 (corresponding to block 30 in Fig. 4). In the case of digital systems, the division can be conveniently carried out by shifting the content of a shift register.

DEC x: loads the decision into the register (A, B, C, D) of the bank 53 indicated by x.

JTFα,γ: jumps to the type of leaf associated with α, where α = A, B, C, D, is one of the registers of the bank 53: the content of the register indicated by α is loaded into the program counter 57. γ = 1 defines the sub-process leaf as the final leaf and sets a flag F indicating "final leaf".

IFFFRINP x: if the flag F (final leaf) is set, this instruction frees the input banks and permits writing to them.

To permit the unconditional freeing of the input banks, it may comprise a one-bit parameter (x) which, when set to one, causes the unconditional freeing of the input banks.

DD x,y: places a double decision in a pair of registers A, B, C, D in the bank 53 indicated by x and y respectively.

RETURN: causes a return to the main flow after a jump caused by JTF.

PAUSE: causes the processing flow to stop to permit access from outside, without interference, to the internal stores and to the external weight stores.

END: declares the end of the process structure and communicates this to the outside (by enabling the gates 62).

SWAPINP: swaps the contents of the input registers 45, 46.

A few examples of sub-process and process routines, which use these instructions in the form of a list of instructions, now follow.

The instruction lines are numbered in sequence.

Instructions in the same line are executed simultaneously.

| TREE PROCESS | | |
|---|---|---|
| 1) | CLT | 5) SLPE1(A) |
| 2) | SLPE1 R1 | 6) IFFFRIMP (x=1) |
| 3) | SLPE2 R1 | 7) SLPE2(A) |
| 4) | DEC A | 8) DEC B |
| | | 9) END |

Explanation: With the neural module reset, a root sub-process R1 is activated in the element SLPE1, using data from the bank 45 and loading the results of the processing into the bank 48.

When the processing has been executed, the content of the bank 48 is dumped into the bank 49, the internal registers of SLPE1 are reset, together with the register 48, and the root sub-process R1 is continued in the element SLPE2, using the data contained in the bank 49.

On completion of the sub-process R1, the decision taken is stored in the register A.

A leaf sub-process (A) having the root R1 and defined by the content of the register A (bank 53) is then activated in the element SLPE1, using the input data stored in the bank 45 and loading the results of the processing into the register 48.

If the leaf sub-process (A) is specified as the final one in the process (more than one leaf sub-process may follow the root sub-process), the IFFFRIMP instruction frees the input banks.

When the processing has been executed in SLPE1, the leaf sub-process is completed in the element SLPE2 (instruction SLPE2(A), the decision taken is loaded into the register B (instruction DEC B) and the process is concluded with the instruction END.

With the final END instruction, the result of the process is communicated to the outside.

Evidently, further layers of sub-process leaves may be provided.

In this example of a process, the two processing elements operate in alternating time intervals.

However, as will be seen subsequently, it is possible, by means of simple modifications of the module shown in Figure 9, to execute with a time overlap two separate processes of the type described by way of example, using two separate processing channels which use common processing resources consisting of SLPE1 and SLPE2.

| ROOT PROCESS WITH COUPLED ROOTS | | | |
|---|---|---|---|
| 1) | CLT | 6) | DEC A |
| 2) | SLPE1 R1 | 7) | JTF (A), 1 |
| 3) | SLPE2 R1, SLPE1 R2 | 8) | DEC B |
| 4) | SLPE2 R2 | 9) | END |
| 5) | DIV 2 | | |

In this example of a routine, two root sub-processes are executed, with a partial time overlap, by the same resources; the results of the processing are accumulated and averaged (DIV2) and the resulting decision is loaded into the register A.

Before the process is declared to the outside as executed, the jump instruction JTF(A), 1 calls a control routine associated with a leaf sub-process of a type or configuration defined by A, and when this has been executed the result of the leaf sub-process A is loaded into the register B and the conclusion of the process is communicated to the outside.

In this case, the resources of the neural module are used for the execution of different root sub-processes with a partial time overlap.

Moreover, no communications with the outside are required to move from a root sub-process to one or more layers of leaf sub-processes.

It should also be noted that the two root sub-processes may be executed on the same input data, or on different sets of data, each stored in a different one of the banks 45 and 46.

For this purpose, the instruction SWAPINP is provided, as stated previously, and in this example is to be inserted into the sequence of instructions after the instruction SLPE1 R1.

| LEAF SUB-PROCESS OF THE NON-COUPLED TYPE | | | |
|---|---|---|---|
| 1) | CLT | 4) | SLPE2 (A) |
| 2) | SLPE1 (A) | 5) | RETURN |
| 3) | IFFFRIMPx | | |

This elementary routine controls all the leaf sub-processes of the non-coupled type which are called by the instruction JFT.

Evidently, no time overlap of the operation of the two elements SLPE1 and SLPE2 is possible in this case, but there remains the substantial advantage that the routine is called without the necessity of the intervention of a supervisory system external to the neural module.

If the leaf has been declared as the final leaf, the instruction IFFFRIMP frees the input banks.

The instruction RETURN returns to the main flow and continues it.

| COUPLED LEAF SUB-PROCESSES | | | |
|---|---|---|---|
| 1) | CLT | 5) | SLPE2 (A)+1 |
| 2) | SLPE1 (A) | 6) | DIV 2 |
| 3) | SLPE2 (A), SLPE1 (A)+1 | 7) | RETURN |
| 4) | IFFFRIMPX | | |

This example of a routine controls coupled leaf sub-processes called by the jump instruction JTF, and requires no further explanation, since it is equivalent to the coupled root sub-processes described previously.

| LEAF SUB-PROCESSES COUPLED IN MULTIPLES OF 2 | | | |
|---|---|---|---|
| 1) | CLT | 6) | IFFFRIMPX |
| 2) | SLPE1 (A) | 7) | SLPE2 (A)+3 |
| 3) | SLPE2 (A); SLPE1 (A)+1 | 8) | DIV 4 |
| 4) | SLPE2 (A)+1; SLPE1 (A)+2 | 9) | RETURN |
| 5) | SLPE2 (A)+2; SLPE1 (A)+3 | | |

This example of a routine, which controls sub-processes in the form of four coupled leaves, also requires no further explanation after what has been explained previously.

| DOUBLE DECISION PROCESS OR SUB-PROCESS | | | |
|---|---|---|---|
| 1) | CLT | 7) | SLPE2 (A); SLPE1 (B) |
| 2) | SLPE1 R1 | 9) | DEC C |
| 3) | SLPE2 R1 | 10) | CLT |
| 4) | DD A, B | 11) | IFFRIMP1 |
| 5) | CLT | 12) | SLPE2 (B) |
| 6) | SLPE1 (A) | 13) | DEC D |
| | | 14) | END/RETURN |

This example of a routine controls a double decision process or sub-process, executing a first root process R and subsequently, with a partial time overlap, two leaf sub-processes A and B defined by the double decision.

The result C, D of the two leaf sub-processes is communicated to an external supervisor (instruction END) or used in a subsequent main flow which is returned to or used in a subsequent main flow which is returned to by RETURN.

The examples of some of the possible routines for the execution of processes and sub-processes given above may be varied in many ways.

For example, the double decision process may be broken down into a root sub-process execution routine which, by two successive jump instructions, calls two single-leaf sub-process execution routines, with an intermediate return to the main flow.

In this case, the advantage of executing some processing phases of the two leaf sub-processes in partial overlap is lost, but the advantage of executing the whole process without external intervention is retained.

In conclusion, a change is made from a commonly used structure such as that shown in Fig. 5, in which a perceptron is controlled by a control logic to execute hierarchically structured tree-type recognition processes, to a multiple-layer perceptron structure, with two processing elements (or more than two if necessary) in series, buffered and individually controllable, controlled by a program which in most cases, if not in all, permits the execution with a time overlap of sub-process phases which require an immense amount of computing work and an intrinsically long execution time which is much greater than the time required for the execution of the operations of resetting (CLT), division (DIV), decision (DEC), jump (JTF), return from routines (RETURN), and freeing the input banks (IFFFRIMP).

A neural module of this type can conveniently be made in the form of an integrated circuit with large-scale integration.

On this point, it should be noted that the greatest circuit complexity is found in the SLPE1 and SLPE2 processing resources.

It is therefore possible to make a module in which the control logic of the neural module, and preferably also (to prevent resource allocation conflicts at the programming level and/or repeated input data swapping operations) the input banks of the first perceptron, the output banks of the second perceptron and the decision element with its output bank are duplicated in such a way as to form two separate processing channels, controlled independently of each other, which use common processing resources, constituted by the perceptrons SLPE1 and SLPE2, by a time-sharing procedure.

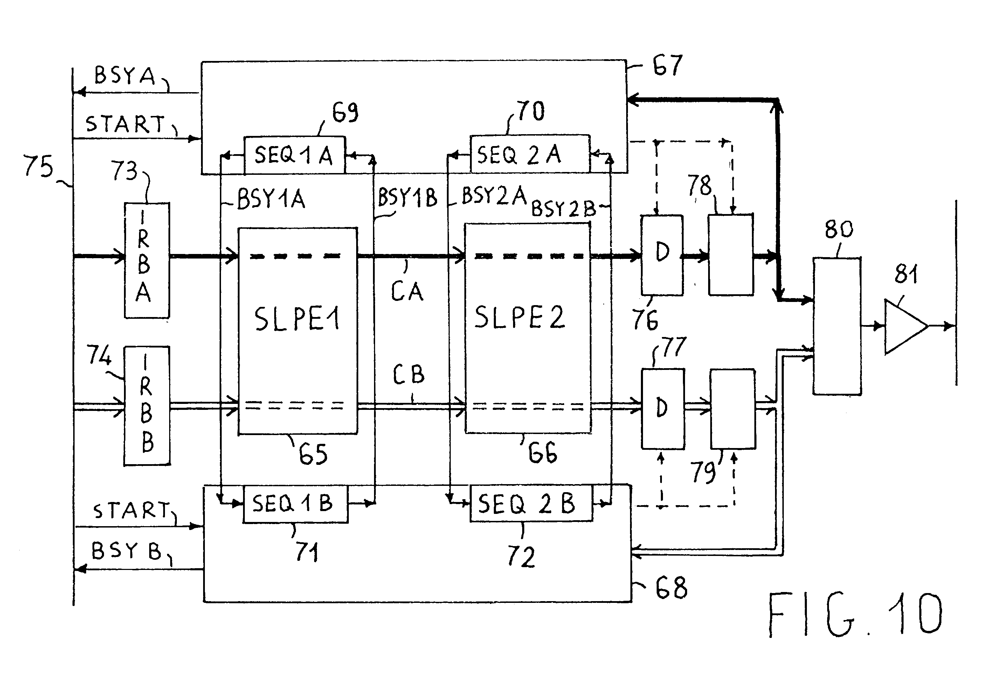

Figure 10 is a schematic block diagram of this architecture.

In Figure 10, two perceptrons SLPE1 65, SLPE2 66, connected in series to form a multiple-layer perceptron, are controlled by two control logics 67, 68, of the type shown in Figure 9, which are independent of and identical to each other.

The control logic 67 comprises two hardware sequencers SEQ1A 69 and SEQ2A 70, dedicated to the control of the perceptrons 65 and 66 respectively.

Similarly, the control logic 68 comprises two hardware sequencers SEQ1B 71 and SEQ2B 72, dedicated to the control of the perceptrons 65 and 66 respectively.

The first perceptron 65 receives input data from one or other of two input register banks IRBA 73 and IRBB 74, loaded through a system bus 75 and read by the sequencer 69 and the sequencer 71 respectively.

The result of the processing executed by the perceptron 65 is transferred through an output register bank which is not illustrated (equivalent to the bank 48 in Fig. 9) to an input register bank (not illustrated and equivalent to the bank 49 in Fig. 9) of the second perceptron 66.

The result of the processing executed by the perceptron 66 is loaded into one of two output register banks which are not illustrated and each of which is controlled by one of the sequencers 70 and 72.

The content of each of the two banks is extracted by one of two decision logics 76, 77 which store the output decisions in two decision register banks 78 and 79 respectively.

These registers have their outputs connected to a FIFO register bank 80 with outputs connected to output gates 81 to a system bus, and also present control data to the inputs of the control logics 67 and 68 respectively.

In this way, two separate input data processing channels CA and CB are formed, and are represented schematically by the path shown as a bold line and by the path shown as a double line.

These channels share the common resources constituted by the perceptrons 65, 66, and are controlled independently of each other by the control logics 67 and 68 respectively.

To avoid conflicts of access to the common resources, it is sufficient to provide for the exchange of two resource busy signals BSY1A and BSY1B between the sequencers 69, 71 and the exchange of two resource busy signals BSY2A and BSY2B between the sequencers 70, 72.

The pairs of sequencers interact in operation, in such a way that, if the sequencer 69 sends the signal BSY1A and controls the perceptron 65, the sequencer 71 remains switched off until the sequencer 61 has completed its functions of controlling the perceptron 65 and BSY1A is disabled.

Conversely, the sequencer 69 remains switched off as long as BSY1B is present.

The behaviour of the sequencers 70, 72 is analogous.

To avoid conflicts of access should two competing signals be sent simultaneously, simple mechanisms are known for arbitration and for prevention of this eventuality, consisting, for example, in forcing the two signals to be sent at different instants.

In this way, the neural module can execute, with a time overlap, two separate processes which may be structured in any way and whose phases are concatenated with each other in the use of the common resources, providing optimal use of these resources.

Although the preceding description, with reference to Figures 9 and 10, relates to a neural module formed by two single-layer perceptrons connected in series, it is evident that the neural module may comprise more than two processing elements connected in series, individually controlled to permit the execution with a time overlap of at least part of more than two separate sub-processes or more than two separate processes, as well as the implementation of a network of multiple-layer perceptrons having more than two layers.

## Claims

1. Neural module (37) comprising a perceptron (34) with a weight input (WI) for receiving weight data from an external memory (38), a data input (DI) for receiving, from an external bus, input data to be processed through a bank of input registers (33), and an output (O) connected, through a bank of output registers (135), to a decision element (35) having at its output at least one decision register (36) with an output connected to gates (39) for connection to the external bus,
characterized in that
the neural module (37) comprises a control logic (40,41,43,44) connected to the output of said decision register (36) for receiving at least one decision result from said decision register (36) and a bank of configuration registers (41) for storing, for each one of a plurality of sub-processes of a process to be executed on the same input data, an address for accessing the corresponding weight data in said memory (38) wherein different weight data are stored for each sub-process, said control logic controlling said perceptron (34), as a function of a decision result of a first one of said sub-processes executed by said perceptron (34) and loaded into said decision register (36), for selecting a second one of said sub-processes to be executed by said perceptron (34) and configuring said perceptron (34) with the weight data read from said memory (38) through the address corresponding to the second sub-process.

2. Neural module according to Claim 1, wherein said bank of configuration registers (41) is further suitable to store, for each sub-process, a number of input nodes, hidden nodes and output node, said control logic further configuring said perceptron (34) with the number of input nodes, hidden nodes and output nodes corresponding to the second sub-process.

3. Neural module according to Claim 1 or 2, made in the form of an integrated circuit.

4. Neural module according to Claim 1, wherein said control logic is programmed and comprises a program counter (57), a program memory (58) and an instruction register (59) called by said program memory.

5. Neural module according to Claim 4, wherein said perceptron comprises at least a first (47) and a second (50) processing element, connected in series through an intermediate pair of register banks (48, 49), wherein said input data register bank comprises a pair (45, 46) of input data register banks, wherein said control logic comprises a first sequencer (55) controlling said first processing element (47) and a second sequencer (56) controlling said second processing element (50), and wherein said decision register (53) is a bank of decision registers (A, B, C, D) for storing a plurality of decision results, in such a way that said first and second processing elements can execute at least part of two different sub-processes with a time overlap.

6. Neural module according to Claim 5, wherein said program memory (58) stores at least one sub-process execution routine comprising at least one instruction (SLPE X,a+b; JTFa,g) having a parameter (a) defined by a decision result loaded into said decision register bank.

7. Neural module according to Claim 6, wherein said instruction is a jump instruction (JTFa,g) having a field (a) which identifies one of said decision registers (A, B, C, D) as the source of a jump address.

8. Neural module according to Claim 7, wherein said program memory stores a routine for the execution, with a partial time overlap, of at least two coupled leaf sub-processes (SP10, SP11).

9. Neural module according to Claim 8, wherein said program memory stores a routine for the execution, with a partial time overlap, of at least two multiple-decision sub-processes (SP12, SP13).

10. Neural module according to Claim 5, wherein said control logic and at least said input register bank (33) and said decision register bank (A, B, C, D) are replicated to form at least two processing channels (CA, CB) having in common the said at least first (47) and second (50) processing elements, in such a way that phases of at least two independent processes can be executed by said module with a time overlap.

## Patentansprüche

1. Neuronales Modul (37), bestehend aus einem Perzeptron (34) mit einem Gewichtseingang (Wl) zum Empfang von Gewichtsdaten von einem externen Speicher (38), einem Dateneingang (Dl) zum Empfang von zu verarbeitenden Eingangsdaten von einem externen Bus über eine Eingangsregisterbank (33), und einem Ausgang (0), der über eine Ausgangsregisterbank (135) mit einem Entscheidungselement (35) verbunden ist, das an seinem Ausgang wenigstens ein Entscheidungsregister (36) mit einem Ausgang hat, der mit Gattern (39) zum Anschluß an den externen Bus verbunden ist,
**dadurch gekennzeichnet, daß**
das neuronale Modul (37) eine Steuerlogik (40,41,43,44) aufweist, die mit dem Ausgang des Entscheidungsregisters (36) verbunden ist, um wenigstens ein Entscheidungsergebnis vom Entscheidungsregister (36) zu erhalten, sowie eine Konfigurationsregisterbank (41), um für jeden von mehreren Unterprozessen eines Prozesses, die an den selben Eingangsdaten durchzuführen sind, eine Adresse für den Zugriff zu den entsprechenden Gewichtsdaten im Speicher (38) zu speichern, wobei unterschiedliche Gewichtsdaten für jeden Unterprozeß, unter Steuerung des Perzeptrons (34) durch die Steuerlogik, als Funktion eines Entscheidungsergebnisses eines ersten Unterprozesses der Unterprozesse, der vom Perzeptron (34) durchgeführt und in das Entscheidungsregister (36) geladen wird, gespeichert werden, um einen zweiten Unterprozeß der Unterprozesse, der vom Perzeptron (34) durchzuführen ist, auszuwählen und das Perzeptron (34) mit den aus dem Speicher (38) über die dem zweiten Unterprozeß entsprechende Adresse ausgelesenen Gewichtsdatendaten zu konfigurieren.

2. Neuronales Modul nach Anspruch 1, bei dem die Konfigurationsregisterbank (41) weiterhin in der Lage ist, für jeden Unterprozeß eine Anzahl Eingangsknoten, verborgene Knoten und Ausgangsknoten zu speichern, und die Steuerlogik außerdem das Perzeptron (34) mit der Anzahl Eingangsknoten, verborgener Knoten und Ausgangsknoten entsprechend dem zweiten Unterprozeß konfiguriert.

3. Neuronales Modul nach Anspruch 1 oder 2, hergestellt in Form einer integrierten Schaltung.

4. Neuronales Modul nach Anspruch 1, bei dem die Steuerlogik programmiert ist und einen Programmzähler (57), einen Programmspeicher (58) und ein Befehlsregister (59) aufweist, das vom Programmspeicher aufgerufen wird.

5. Neuronales Modul nach Anspruch 4, bei dem das Perzeptron wenigstens ein erstes und ein zweites Verarbeitungselement (47,50) aufweist, die durch ein Zwischenpaar von Registerbänken (48,49) in Reihe geschaltet sind, wobei die Eingangsdatenregisterbank ein Paar Eingangsdatenregisterbänke (45,46) aufweist, wobei die Steuerlogik einen ersten Sequenzer (55) aufweist, der das erste Verarbeitungselement (47) steuert, sowie einen zweiten Sequenzer (56), der das zweite Verarbeitungselement (50) steuert, und wobei das Entscheidungsregister (53) eine Entscheidungsregisterbank (A, B, C, D) ist, um mehrere Entscheidungsergebnisse derart zu speichern, daß das erste und zweite Verarbeitungselement wenigstens einen Teil von zwei unterschiedlichen Unterprozessen mit einer zeitlichen Überlappung durchführen kann.

6. Neuronales Modul nach Anspruch 5, bei dem der Programmspeicher (58) wenigstens eine Unterprozeß-Ausführungsroutine speichert, die wenigstens einen Befehl (SLPE X,a+b;JTFa,g) umfaßt, der einen Parameter (a) hat, der durch ein Entscheidungsergebnis definiert ist, das in die Entscheidungsregisterbank geladen wird.

7. Neuronales Modul nach Anspruch 6, bei dem der Befehl ein Sprungbefehl (JTFa,g) ist, der ein Feld (a) hat, das eines der Entscheidungsregister (A, B, C. D) als Quelle einer Sprungadresse identifiziert.

8. Neuronales Modul nach Anspruch 7 bei dem der Programmspeicher eine Routine zur Durchführung mit einer Teilzeitüberlappung von wenigstens zwei gekoppelten Blattunterprozessen (SP10, SP11) speichert.

9. Neuronales Modul nach Anspruch 8, bei dem der Programmspeicher eine Routine zur Durchführung mit einer Teilzeitüberlappung von wenigstens zwei Mehrfachentscheidungs-Unterprozessen (SP12, SP13) speichert.

10. Neuronales Modul nach Anspruch 5, bei dem die Steuerlogik und wenigstens die Eingangsregisterbank (33) und die Entscheidungsregisterbank (A, B, C, D) zur Bildung von wenigstens zwei Verarbeitungskanälen (CA, CB) verdoppelt sind, die das wenigstens erste und zweite Verarbeitungselement (47, 50) derart gemeinsam haben, so daß Phasen von wenigstens zwei unabhängigen Prozessen vom Modul mit zeitlicher Überlappung durchgeführt werden können.

## Revendications

1. Module neuronal (37) comprenant un perceptron (34) muni d'une entrée de pondération (WI) destinée à recevoir des données de pondération provenant d'une mémoire externe (38), une entrée de données (DI) destinée à recevoir, d'un bus externe, des données d'entrée devant être traitées par l'intermédiaire d'un groupe de registres d'entrée (33), et une sortie (O) reliée, par l'intermédiaire d'un groupe de registres de sortie (135), à un élément de décision (35) comportant à sa sortie au moins un registre de décision (36), une sortie étant reliée à des portes (39) en vue d'une connexion au bus externe,
caractérisé en ce que
le module neuronal (37) comprend une logique de commande (40, 41, 43, 44) reliée à la sortie dudit registre de décision (36) afin de recevoir au moins un résultat de décision provenant dudit registre de décision (36) et un groupe de registres de configuration (41) destiné à mémoriser, pour chacun d'une pluralité de sous-traitement d'un traitement devant être exécutée sur les mêmes données d'entrée, une adresse destinée à accéder aux données de pondération correspondantes dans ladite mémoire (38), dans lesquelles des données de pondération différentes sont mémorisées pour chaque sous-traitement, ladite logique de commande commandant ledit perceptron (34), en fonction d'un résultat de décision d'un premier desdits sous-traitements exécutés par ledit perceptron (34) et chargé dans ledit registre de décision (36), en vue de sélectionner un second desdits sous-traitements devant être exécutés par ledit perceptron (34) et configurer ledit perceptron (34) avec les données de pondération lues à partir de ladite mémoire (38) par l'intermédiaire de l'adresse correspondant au second sous-traitement.

2. Module neuronal selon la revendication 1, dans lequel ledit groupe de registres de configuration (41) convient en outre pour mémoriser, pour chaque sous-traitement, un certain nombre de noeuds d'entrée, de noeuds cachés et un noeud de sortie, ladite logique de commande configurant en outre ledit perceptron (34) avec le nombre des noeuds d'entrée, de noeuds cachés et de noeuds de sortie correspondant au second sous-traitement.

3. Module neuronal selon la revendication 1 ou 2, constitué sous forme d'un circuit intégré.

4. Module neuronal selon la revendication 1, dans lequel ladite logique de commande est programmée et comprend un compteur de programme (57), une mémoire de programme (58) et un registre d'instructions (59) appelé par ladite mémoire de programme.

5. Module neuronal selon la revendication 4, dans lequel ledit perceptron comprend au moins un premier (47) et un second (50) éléments de traitement, reliés en série grâce à une paire intermédiaire de groupes de registres (48, 49), dans lequel ledit groupe de registres de données d'entrée comprend une paire (45, 46) de groupes de registres de données d'entrée, dans lequel ladite logique de commande comprend un premier séquenceur (55) qui commande ledit premier élément de traitement (47) et un second séquenceur (56) qui commande ledit second élément de traitement (50), et dans lequel ledit registre de décision (53) est un groupe de registres de décision (A, B, C, D) destiné à mémoriser une pluralité de résultats de décision, de telle manière que lesdits premier et second éléments de traitement puissent exécuter au moins une partie de deux sous-traitements différents avec un chevauchement dans le temps.

6. Module neuronal selon la revendication 5, dans lequel ladite mémoire de programme (58) mémorise au moins un sous-programme d'exécution de sous-traitement comprenant au moins une instruction (SLPE, X,a+b ; JTFa,g) comportant un paramètre (a) défini par un résultat de décision chargé dans ledit groupe de registres de décision.

7. Module neuronal selon la revendication 6, dans lequel ladite instruction est une instruction de saut (JTFa,g) comportant un champ (a) qui identifie l'un desdits registres de décision (A, B, C, D) en tant que source d'une adresse de saut.

8. Module neuronal selon la revendication 7, dans lequel ladite mémoire de programme mémorise un sous-programme destiné à l'exécution, avec un chevauchement partiel dans le temps, d'au moins deux sous-traitements associés d'une feuille (SP10, SP11).

9. Module neuronal selon la revendication 8, dans lequel ladite mémoire de programme mémorise un sous-programme en vue de l'exécution, avec un chevauchement partiel dans le temps, d'au moins deux sous-traitements de décisions multiples (SP12, SP13).

10. Module neuronal selon la revendication 5, dans lequel ladite logique de commande et au moins ledit groupe de registres d'entrée (33) et ledit groupe de registres de décision (A, B, C, D) sont dupliqués pour former au moins deux canaux de traitement (CA, CB) ayant en commun lesdits au moins premier (47) et second (50) éléments de traitement de telle manière que les phases d'au moins deux traitements indépendants puissent être exécutées par ledit module avec un chevauchement dans le temps.
